# EUROPÄISCHE PATENTSCHRIFT

(11) **EP 2 117 227 B1**
(45) Veröffentlichungstag und Bekanntmachung des Hinweises auf die Patenterteilung: **28.05.2014**
(21) Anmeldenummer: 08105969.3
(22) Anmeldetag: 11.12.2008
(51) Int. Cl.: H04N 5/232

(54) **Datenübertragungseinrichtung, Bildstabilisierungssystem und Bilderfassungseinheit**
Data transfer device, image stabilisation system and imaging unit
Dispositif de transmission de données, système de stabilisation d'image et unité d'enregistrement d'image

(30) Priorität: 09.05.2008 DE 102008001676
(43) Veröffentlichungstag der Anmeldung: 11.11.2009
(73) Patentinhaber: Robert Bosch GmbH, 70442 Stuttgart (DE)
(72) Erfinder: Kohn, Oliver, 72768, Reutlingen (DE)

(56) Entgegenhaltungen:
- EP-A2- 2 037 670
- US-A1- 2006 170 784
- US-A1- 2006 228 049
- US-A1- 2007 104 479
- MINYOUNG EOM ET AL: "Performance Comparison of Camera Interface Methods in a Mobile Handset", COMPUTER AND INFORMATION TECHNOLOGY, 2007. CIT 2007. 7TH IEEE INTERNATIONAL CONFERENCE ON, IEEE, PISCATAWAY, NJ, USA, 16. Oktober 2007 (2007-10-16), Seiten 835-840, XP031220926, ISBN: 978-0-7695-2983-7

## Beschreibung

Die Erfindung betrifft eine Datenverarbeitungseinrichtung gemäß dem Oberbegriff des Anspruchs 1. Weiter betrifft die Erfindung ein Bildstabilisierungssystem gemäß dem Oberbegriff des Anspruchs 4. Auch betrifft die Erfindung eine Bilderfassungseinheit, insbesondere ein Handy, eine Kamera, einen Fotoapparat, eine Videokamera und dergleichen, gemäß dem Oberbegriff des Anspruchs 8. Darüber hinaus betrifft die Erfindung ein Verfahren zur Generierung verwacklungsarmer digitaler Bilder nach dem Oberbegriff des Anspruchs 9. Nicht zuletzt betrifft die Erfindung ein Computerprogramm nach Anspruch 10 und ein Computerprogrammprodukt nach Anspruch 12.

### Stand der Technik

Die Erfindung geht aus von einer Datenverarbeitungseinrichtung, einem Bildstabilisierungssystem und einer Bilderfassungseinheit nach Gattung der unabhängigen Ansprüche. Weiter geht die Erfindung von einem Verfahren, einem Computerprogramm und einem Computerprogrammprodukt nach Gattung der unabhängigen Ansprüche aus. Gegenstand der vorliegenden Erfindung sind auch Kameras, Videokameras, Fotohandys und dergleichen, bei denen zur Erzeugung eines verwacklungsfreien oder verwacklungsarmen Bildes ein Bildstabilisierungssystem verwendet wird.

Aus der US 2004/0189814 A1 ist ein Bildstabilisierungssystem bekannt, bei dem ein Bewegungssensor ein analoges Bewegungsdetektionssignal ausgibt, welches eine Bewegung eines Kamerakörpers repräsentiert. Ein Verstärker verstärkt das analoge Bewegungsdetektionssignal, um ein analoges verstärktes Signal zu erzeugen. Beide Signale werden in digitale Signale konvertiert. Zu Bildstabilisierung wird ein Korrektursignal erzeugt.

Die EP 2 037 670 A2 beschreibt eine Bildsensorvorrichtung und ein Verfahren zum Einbetten von Bildstabilisierungsdaten in Bilddaten. Dabei generiert ein mit einem Bildsensor verbundener BewegungssensorBewegungsdaten in Abhängigkeit einer Bewegung des Bildsensors. Ein mit dem Bildsensor verbundener Prozessor erhält eingebettete Bildedaten des Bildsensors, wobei die eingebetteten Bilddaten die in die Bilddaten eingebetteten Bewegungsdaten enthalten. Der Prozessor ermittelt die eingebetteten Bilddaten, um ein bewgungskompensiertes, digitales Bild zu generieren. Dieses Dokument gehört zum Stand der Technik gemäß Art. 54(3) EPÜ.

Die US 2006/0228049 A1 beschreibt ein Verfahren zur Erfassung einer Sequenz von Videobildern, mittels eine Bildberechnungseinrichtung, wobei eine Schätzung der Parameter eines Modells einer globalen Bewegung zwischen aufeinander folgenden Bildern durchgeführt wird. In einer Ausführungsform umfasst das Verfahren eine Messung von lokalen Bewegungen an den Kanten der Bilder und die Schätzung der Parameter der globalen Bewegung des Modells erfolgt über das Ergebnis der Messung der lokalen Bewegungen an den Rändern der Bilder.

Die US 2006/0170784 A1 beschreibt ein Bildaufnahmegerät, welches ein Bild eines Objektes aufnimmt und Bilddaten generiert. Weiter wird eine Vielzahl von Bildaufnahmegeräten beschrieben, die ein Bild eines Teils des Objektes aufnehmen, um partielle Bilddaten zu generieren, die einen Teil der Bilddaten basierend auf dem Teil des Objektes erzeugen. Mittels eines Detektors werden Bewegungen der Bildaufnahmegeräte erfasst, um für jedes Bildaufnahmegerät Bewegungsdaten basierend auf den erfassten Bewegungen zu generieren. Zusätzlich werden mittels eines Prozessors die partiellen Bilddaten korrigiert, um die Bewegung während der Bildaufnahem basierend auf den Bewegungsdaten zu kompensieren.

Die US 2007/104479 A1 lehrt eine Methode für die Korrektur von Bildern, die von einem Handheld-Gerät erfasst werden, ohne das Handheld-Gerät mit platzbeanspruchenden und teuren VerwacklungsbewegungsAusgleichsmechanismen oder teuren Verarbeitungs-Ressourcen für die Unterstützung von Korrekturalgorithmen auszurüsten. Das vorgeschlagene Verfahren zur Korrektur eines Bildes umfasst die Übertragung des Bildes aus dem Handheld-Gerät auf ein Remote-System, das die Bildkorrektur mittels bereitgestellter Bilddaten und Verwacklungsbewegungsdaten vornimmt, und dann das Verschieben des korrigierten Bildes von dem Remote-System zurück auf das Handheld-Gerät. Offenbart wird dazu das Übertragen von mittels einer Optik erfassten Bilddaten eines Bildes und von mittels eines Bewegungsensors ermittelten Relativbewegungsdaten der Optik über eine Schnittstelle zu dem Remote-System, die die Bilddaten und die Verwacklungsbewegungsdaten synchronisiert kombiniert miteinander überträgt.

Aus dem allgemeinen Stand der Technik sind weiter softwareseitige Lösungen zur Bildstabilisierung bekannt. Diese Lösungen umfassen so genannte DIS (Digital Image Stabilisierung), EIS (Electronical Image Stabilisierung) und OIS (Optical Image Stabilisierung). Bei DIS werden Bildsignale nur mittels einer Software korrigiert. Bei DIS werden die Bilddaten anhand von zusätzlichen Bewegungsdaten von einem Gyroskop mittels einer Software korrigiert. Bei OIS werden die Bilddaten mittels einer Software, einem Gyroskop und einem Aktuator, welcher die Linse oder die Bildablichtungseinheit entsprechend bewegen kann, korrigiert. Werden Bildsignale und Bewegungssignale (Wackelbewegungen) übertragen (EIS, OIS), so geschieht dies über ein analoges Interface, wobei die Daten weiter zu einem Mikrocontroller geleitet werden, welcher ein entsprechend unverwackeltes oder stabilisiertes Bild ggf. unter Einsatz entsprechender Software ausgibt.

### Offenbarung der Erfindung

Die erfindungsgemäße Datenübertragungseinrichtung sowie das erfindungsgemäße Verfahren zur Generierung verwacklungsarmer, digitaler Bilder von Objekten mit den Merkmalen des entsprechenden Hauptanspruchs sowie das Computerprogramm und das Computerprogrammprodukt mit den Merkmalen des jeweils entsprechenden nebengeordneten Anspruchs haben demgegenüber den Vorteil, dass die Daten kombiniert und synchronisiert übertragen werden, wodurch die Daten über eine gemeinsame Datenleitung synchron übertragen werden können, zum Beispiel mittels geeigneter Dateneinheiten, und keine nachträgliche Zuordnung oder Synchronisation statt finden muss, wie beispielsweise bei mehreren Datenleitungen, in denen die Datenübertragung eventuell sogar zeitversetzt erfolgt und ggf. zusätzliche Informationen hinsichtlich der nachträglichen Synchronisation, wie zum Beispiel Zeitpunktdaten etc, mit übertragen werden müssen. Durch entsprechende Datenpakete wird so weniger Datenleitungskapazität belegt, sodass größere Datenmengen über weniger Leitungen und/oder in kürzerer Zeit übertragen werden können.

Durch die in den abhängigen Ansprüchen aufgeführten Maßnahmen sind vorteilhafte Weiterbildungen und Verbesserungen der in den unabhängigen Ansprüchen angegebenen Vorrichtungen möglich.

Besonders vorteilhaft ist es, dass die Schnittstelle eine digitale Schnittstelle ist. Hierdurch lässt sich die Verarbeitungsgeschwindigkeit durch die digitale Technik weiter erhöhen. Zudem bietet eine digitale Schnittstelle ein besseres Ergebnis gegenüber analogen Schnittstellen und die Daten sind bei höherer Qualität besser reprodzuierbar.

Noch ein Vorteil der vorliegenden Erfindung ist es, dass die Schnittstelle die Bilddaten zeilen- und/oder spaltenweise überträgt. Hierdurch lassen sich einfach aufgebaute CMOS-Optiken, CCD-Optiken, entsprechende Sensoren oder dergleichen verwenden. Mittels der zeilen- und/oder spaltenweisen Übertragung entsteht ein heute gängiges Pixelbild. Für die Übertragung von Pixelbildern können entsprechende Formate zur Datenübertragung verwendet werden. Erfindungsgemäß wird an ein in Matrixschreibweise ausgebildetes Format der Bilddaten eine zusätzliche Zeile und/oder Spalte anhängt, die die Verwacklungsbewegungsdaten enthält, wobei die Bewegungsdaten mit den entsprechenden Zeilen/Spalten der Bilddaten übertragen werden. Zweckmäßig kann eine Drehrate oder dergleichen pro Bild mit einem Pixelformat übertragen werden. In einer anderen Ausführung kann eine Drehrate oder dergleichen pro Zeile beziehungsweise Spalte übertragen werden. In noch anderen Ausführungsbeispielen lassen sich vorverarbeitete Verwacklungsbewegungsdaten (zum Beispiel Winkel) und dergleichen zusätzlich zu den Pixeln übertragen.

In einer besonderen bevorzugten Ausführungsform überträgt die Schnittstelle die Bilddaten in Gruppierungen zeilen- und/oder spaltenweise, wobei die Gruppierungen sequenziell übertragen werden. Die Gruppierung kann vorzugsweise Spalten und/oder Zeilen gruppieren, beispielsweise in 5er-Gruppierungen, 10er-Gruppierung und dergleichen. Bei einer 5er-Gruppierung werden dann zum Beispiel fünf Zeilen und/oder Spalten einer Gruppierung zugeordnet. Es wird dann eine Gruppierung nach der anderen Gruppierung übertragen. Hierdurch lässt sich ein verbessertes Rolling-Shutter-Prinzip anwenden, welches zum Beispiel in Kameraphones verwendet werden kann. Gegenüber einem herkömmlichen Rolling-Shutter-Prinzip, bei welchem eine Bildstabilisierung mit einem so genannten Multiframe-Ansatz nicht möglich ist, ist dieses bei dem verbesserten Rolling-Shutter-Prinzip, das heißt bei entsprechender Gruppierung, möglich. Hierbei werden mehrere kurz belichtete, scharfe Bilder mit Hilfe der Drehrateninformation gegeneinander verschoben und daraus ein unverwackeltes Bild gewonnen. Mit dem verbesserten Rolling-Shutter-Prinzip lassen sich gruppierte Zeilen und/oder Spalten, beispielsweise 5 bis 10 Zeilen gleichzeitig belichten und mit Drehratenwerten übertragen, bevor die nächsten 5 bis 10 Zeilen belichtet, synchronisiert und übertragen werden. Hierbei müssen lediglich die 5 bis 10 Zeilen gespeichert werden und nicht das gesamte Bild. Die Gruppierungen können auch in anderer Größe erfolgen. Aufgrund der Gruppierung lässt sich eine einfache Bildstabilisierung realisieren.

Das erfindungsgemäße Bildstabilisierungssystem und die erfindungsgemäße Bilderfassungseinheit mit den Merkmalen der nebengeordneten Ansprüche haben gegenüber dem Stand der Technik den Vorteil, dass durch die synchronisierte Übertragung von Bild- und Bewegungsdaten der Rechenaufwand zur Synchronisierung in dem Mikrocontroller reduziert ist. Zudem wird nur eine Leitung für die synchronisierte Übertragung benötigt. Hiermit lassen sich so Daten reduzieren, da die Bild- und Bewegungsdaten nicht zusätzliche Informationen aufweisen müssen, um nachträglich synchronisiert werden zu können. Damit lässt sich eine schnellere Bildbearbeitung realisieren bzw. es wird weniger Rechenleistung für die Bildverarbeitung benötigt. Die Bild- und Bewegungsdaten werden nicht über separate Leitungen sondern gebündelt und synchronisiert über eine gemeinsame Datenleitung zu dem Mikrocontroller übertragen. Somit können auch hochauflösende Bilder, beispielsweise mit erhöhter Pixelanzahl, auch in weniger leistungsstarken Geräten wie einem Handy, verwacklungsfrei erzeugt werden.

Weiterhin vorteilhaft ist es, dass der Bewegungssensor Verwacklungsbewegungsdaten erfasst, ausgewählt aus der Gruppe umfassend Drehraten, Beschleunigungsraten, Magnetraten und dergleichen. Der Bewegungssensor ist ausgebildet, um Verwacklungsbewegungsdaten bei der optischen Erfassung und Generierung von Bilddaten zu erfassen. Insbesondere aus erfassten Drehraten können korrigierte Bilder, die insbesondere verwacklungsfrei sind, besser erzeugt werden. Alternativ kann der Bewegungssensor zur Erfassung von Bewegungsdaten beliebig ausgebildet sein, zum Beispiel als Beschleunigungssensor, als Magnetsensor (elektronischer Kompass) oder dergleichen. Es kann ein Sensor vorgesehen sein oder aber auch mehrere Sensoren, beispielsweise mehrere Beschleunigungssensoren. Die Sensoren erfassen die Bewegung dabei bevorzugt in unterschiedliche Richtungen.

Insbesondere ist es vorteilhaft, dass der Bewegungssensor mehrere Verwacklungsbewegungsdaten um verschiedene Achsen erfasst. Je mehr Verwacklungsbewegungsdaten um unterschiedliche Achsen erfasst werden, desto genauer lässt sich eine Verwacklung berechnen und daraus dann ein stabilisiertes Bild erzeugen.

### Kurze Beschreibung der Zeichnungen

Ausführungsbeispiele der Erfindung sind in den Zeichnungen dargestellt und in der nachfolgenden Beschreibung näher erläutert.

Es zeigen:
Figur 1 schematisch einen Aufbau eines Bildstabilisierungssystems,
Figur 2 schematisch ein Datenformat zur Übertragung von synchronisierten Bild- und Bewegungsdaten und
Figur 3 schematisch ein zweites Ausführungsbeispiel eines erfindungsgemäßen Bildstabilisierungssystems.

### Ausführungsformen der Erfindung

Das vorliegende Bildstabilisierungssystem zur Generierung verwacklungsfehlerarmer digitaler Bilder von Objekten kann in beliebigen Bilderfassungseinheiten wie Handys, Kameras, Fotoapparaten, Videokameras und dergleichen verwendet werden. Insbesondere ist die Verwendung des erfindungsgemäßen Bildstabilisierungssystems vorteilhaft bei Bilderfassungseinheiten, denen keine hohe Rechenkapazität zur Verfügung steht, wie beispielsweise bei Kameraphones. Die vorliegende Erfindung ist jedoch allgemein für beliebige Bilderfassungseinheiten dargestellt.

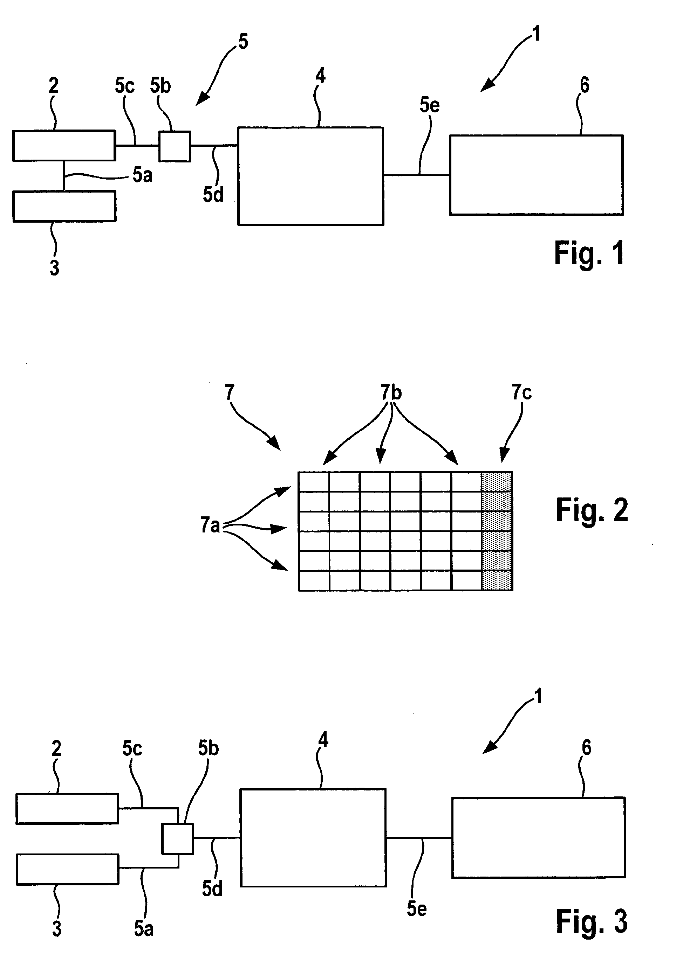

In der Figur 1 ist schematisch ein Bildstabilisierungssystem 1 stark vereinfacht dargestellt. Das Bildstabilisierungssystem 1 zur Generierung verwacklungsfehlerarmer oder -freier digitaler Bilder von Objekten umfasst mindestens eine Optik 2 zur optischen Erfassung und Generierung von Bilddaten des Objektes. Die Optik 2 umfasst vorliegend beispielhaft eine Kamera, kann aber jede geeignete Optik zur Erfassung von Bilddaten sein. Weiter umfasst das Bildstabilisierungssystem 1 mindestens einen Bewegungssensor 3 zur Erfassung von Verwackelungsbewegungsdaten bei der optischen Erfassung und Generierung von Bilddaten eines Objektes. Die Verwacklungsbewegungsdaten können beliebige Bewegungsdaten sein, beispielsweise Drehraten, Beschleunigungen und dergleichen. Der Bewegungssensor kann ein Drehratenerfassungssensor und/oder ein Beschleunigungssensor sein. Weiter umfasst das Bildstabilisierungssystem 1 einen Mikrocontroller 4 zur bildbearbeitenden Korrektur der erfassten und generierten Bilddaten anhand der erfassten (Verwacklungs-)Bewegungsdaten, um verwacklungsfehlerarme oder - freie digitale Bilder zu erzeugen. Der Mikrocontroller 4 ist über eine Datenverarbeitungseinrichtung 5 mit der Optik 2 und dem Bewegungssensor 3, der vorliegend als Gyroskop ausgebildet ist, verbunden, um die erfassten Daten (Bild- und Bewegungsdaten) zu empfangen. In dem in Figur 1 dargestellten Ausführungsbeispiel umfasst die Datenverarbeitungseinrichtung 5 eine erste Datenleitung 5a, welche den Bewegungssensor 3 mit der Optik 2 verbindet. Weiter umfasst die Datenverarbeitungseinrichtung 5 eine Schnittstelle 5b, über welche synchronisiert die erfassten Daten der Optik 2 und des Bewegungssensors 3 kombiniert, das heißt in einem gemeinsamen Format, übertragen werden. Die Schnittstelle 5b ist über eine zweite Datenleitung 5c mit der Optik 2 verbunden und über eine dritte Datenleitung 5d mit dem Mikrocontroller 4. Weiterhin ist der Mikrocontroller 4 mit einer Ausgabeeinheit 6 über eine vierte Datenleitung 5e verbunden. Die Daten, die von dem Mikrocontroller 4 an die Ausgabeeinheit 6 über die Datenleitung 5c weitergegeben werden, repräsentieren das unverwackelte Bild, also das stabilisierte Bild, nach der Verarbeitung in dem Mikrocontroller 4. Die Datenleitungen 5a, 5c-5e können drahtgebunden oder drahtlos ausgebildet sein. Drahtgebunden kann dies zum Beispiel über entsprechende Kabel realisiert sein. Drahtlose Datenleitungen schließen Bluetooth-Verbindungen, Funkverbindungen, Infrarotverbindungen und dergleichen ein. In dem dargestellten Bildstabilisierungssystem 1 werden zeitgleich zu dem Bild die Bewegungsdaten erfasst und über die Datenleitungen 5a, 5c, 5d und die Schnittstelle 5c an den Mikrocontroller 4 weitergeleitet.

Das hierfür erforderliche Datenformat ist in Figur 2 dargestellt.

Figur 2 zeigt schematisch das Datenformat für ein erfindungsgemäßes Bildstabilisierungssystem 1. Bei dem erfassten Bild handelt es sich um ein Pixelbild 7, welches ein reales Bild in Zeilen 7a und Spalten 7b aufteilt, sodass ein matrixartiges Format realisiert ist. Vorliegend ist das Pixelbild 7 bestehend aus sechs Zeilen und sieben Spalten dargestellt. Die letzte Spalte 7c beinhaltet in der dargestellten Figur 2 die von dem Bewegungssensor 3 erfassten (Verwacklungs-)Bewegungsdaten. Die Verwacklungsbewegungsdaten können Drehratenwerte sein, zum Beispiel eine Drehrate pro Bild, eine Drehrate pro Zeile/Spalter und/oder vorverarbeitete Drehraten wie Winkel. Mit dem dargestellten Datenformat werden synchronisiert Bilddaten sowie Verwacklungsbewegungsdaten über die Schnittstelle 5c an den Mikrocontroller 4 weitergeleitet. Die Bewegungsdaten können auch in einer Zeile mit dem Pixelbild übertragen werden. Zudem können mehrere Zeilen und/oder Spalten vorgesehen sein. In der dargestellten Figur 2 ist die letzte Spalte 7c, welche zusätzlich dunkler dargestellt ist, für die Bewegungsdaten vorgesehen.

Figur 3 zeigt ein zweites Ausführungsbeispiel eines Bildstabilisierungssystems 1 in schematischer Darstellung. In dem in Figur 3 dargestellten Bildstabilisierungssystem 1 ist die von dem Bewegungssensor 3 ausgehende Datenleitung 5a im Unterschied zu Figur 1 nicht direkt mit der Optik 2 verbunden, sondern wird direkt zu dem Interface 5b geführt. Analog wird die zweite Datenleitung 5c von der Optik 2 direkt zu der Schnittstelle 5b geführt, wie schon in Figur 1 dargestellt. In der Schnittstelle 5c werden die über die Datenleitungen 5a und 5c übertragenen Daten synchronisiert und in ein gemeinsames Datenformat (siehe Figur 2) gebracht. Von der Schnittstelle 5b aus führt die dritte Datenleitung 5d zu dem Mikrocontroller 4, in welchem die Bildbearbeitung, das heißt eine Bildkorrektur, durchgeführt wird. Der Mikrocontroller 4 ist, wie auch in Figur 1, hier über eine vierte Datenleitung 5e mit der Ausgabeeinheit 6 gekoppelt.

## Patentansprüche

1. Datenverarbeitungseinrichtung (5) für ein Bildstabilisierungssystem (1) zur Generierung verwacklungsfehlerarmer, digitaler Bilder von Objekten, zum Übertragen von mittels mindestens einer Optik (2) zu erfassenden Bilddaten eines Bildes und dazu mittels mindestens einem Bewegungssensor (3) als Verwacklungsbewegungsdaten des Bildes erfassten Relativbewegungsdaten der Optik (2) zu dem Bild, wobei die Datenverarbeitungseinrichtung (5) eine digitale Schnittstelle (5b) aufweist, mit der die Bilddaten der Optik (2) zeilen- und/oder spaltenweise und die Verwacklungsbewegungsdaten des Bewegungssensors (3) synchron übertragen werden und von der die Daten gebündelt und synchronisiert über eine gemeinsame Datenleitung (5d) zu einem Mikrocontroller (4) übertragen werden, **dadurch gekennzeichnet, dass**
die Schnittstelle (5b) die Bilddaten und die Verwacklungsbewegungsdaten für die Übertragung zu dem Mikrocontroller (4) synchron miteinander kombiniert, wobei die Schnittstelle (5b) den Zeilen und Spalten eines in Matrixschreibweise ausgebildeten Formats der Bilddaten eine zusätzliche Zeile und/oder Spalte hinzufügt, die die Verwacklungsbewegungsdaten enthält, und die Verwacklungsbewegungsdaten mit den entsprechenden Zeilen/Spalten der Bilddaten zeilen- und/oder spaltenweise als Datenpakete mit überträgt.

2. Datenverarbeitungseinrichtung (5) nach Anspruch 1, **dadurch gekennzeichnet, dass** die Schnittstelle (5b) die Bilddaten in Gruppierungen zeilen- und/oder spaltenweise überträgt, wobei die Gruppierungen sequenziell übertragbar sind.

3. Datenverarbeitungseinrichtung (5) nach Anspruch 1 oder 2, dass die Schnittstelle (5b) synchronisiert mit den Bilddaten mindestens zwei Relativbewegungsdaten in verschiedene Richtungen überträgt.

4. Bildstabiliserungssystem (1) zur Generierung verwacklungsfehlerarmer, digitaler Bilder von Objekten, umfassend mindestens eine Optik (2) zur optischen Erfassung und Generierung von Bilddaten des Objektes, mindestens einen Bewegungssensor (3) zur Erfassung von Verwacklungsbewegungsdaten bei der optischen Erfassung und Generierung, mindestens einen Mikrocontroller (4) zur bildbearbeitenden Korrektur der erfassten und generierten Bilddaten anhand der erfassten Verwacklungsbewegungsdaten, um verwacklungsfehlerfreie, digitale Bilder zu erzeugen, **dadurch gekennzeichnet, dass** der Mikrocontroller (4) über eine Datenverarbeitungseinrichtung (5) nach einem der vorherigen Ansprüche 1 bis 3 mit der Optik (2) und dem Bewegungssensor (3) verbunden ist, um die erfassten Daten synchronisiert zu übertragen.

5. Bildstabilisierungssystem (1) nach Anspruch 4, **dadurch gekennzeichnet, dass** der Bewegungssensor (3) Verwacklungsbewegungsdaten erfasst, ausgewählt aus der Gruppe umfassend Relativbewegungen zwischen Optik (2) und Bewegungssensor (3), Drehraten der Optik (2), Beschleunigungsraten der Optik (2), Magnetraten der Optik (2) und dergleichen.

6. Bildstabiliserungssystem (1) nach Anspruch 4 oder 5, **dadurch gekennzeichnet, dass** der Bewegungssensor (3) mehrere Verwacklungsbewegungsdaten in verschiedene Richtungen und/oder um verschiedene Achsen erfasst.

7. Bildstabiliserungssystem (1) nach einem der vorherigen Ansprüche 4 bis 6, **dadurch gekennzeichnet, dass** die Optik (2) und der Bewegungssensor (3) integriert in einer Einheit ausgebildet sind.

8. Bilderfassungseinheit, insbesondere (Foto-)Handy, Kamera, Fotoapparat, Videokamera und dergleichen, **dadurch gekennzeichnet, dass** die Bilderfassungseinheit mit einem Bildstabiliserungssystem (1) nach einem der vorherigen Ansprüche 4 bis 7 ausgebildet ist.

9. Verfahren zur Generierung verwacklungsarmer digitaler Bilder von Objekten, umfassend die Schritte:
optisches Erfassen und Generieren von Bilddaten des Objektes mittels mindestens einer Optik (2),
Erfassen von Verwacklungsbewegungsdaten bei der optischen Erfassung und Generierung mittels mindestens eines Bewegungssensors (3),
Übertragen der erfassten Daten zu einem Mikrocontroller (4) mittels mindestens einer Datenübertragungseinrichtung(5) und
bildbearbeitendes Korrigieren der erfassten und generierten Bilddaten anhand der erfassten Verwacklungsbewegungsdaten mittels des Mikrocontrollers (4), um verwacklungsfehlerfreie, digitale Bilder zu erzeugen,
wobei in dem Schritt Übertragen, die erfassten Daten der Optik (2) zeilen- und/oder spaltenweise und des Bewegungssensors (3) von einer digitalen Schnittstelle synchron übertragen werden und von der die Daten gebündelt und synchronisiert über eine gemeinsame Datenleitung (5d) an den Mikrocontroller (4) mittels einer Datenverarbeitungseinrichtung (5) übertragen werden, **dadurch gekennzeichnet, dass**
die Bilddaten und die Verwacklungsbewegungsdaten für die Übertragung zu dem Mikrocontroller (4) von der zwischen der Optik (2) sowie dem Bewegungssensor (3) und dem Mikrocontroller (4) angeordneten digitalen Schnittstelle (5b) synchron miteinander kombiniert werden, wobei durch die Schnittstelle (5b) den Zeilen und Spalten eines in Matrixschreibweise ausgebildeten Formats der Bilddaten eine zusätzliche Zeile und/oder Spalte hinzufügt wird und die Verwacklungsbewegungsdaten mit den entsprechenden Zeilen/Spalten der Bilddaten zeilen- und/oder spaltenweise mit übertragen werden.

10. Computerprogramm umfassend Programmcodemittel zum Durchführen aller Schritte gemäß des Anspruchs 9, wenn das Programm auf einem Computer ausgeführt wird.

11. Computerprogramm nach Anspruch 10, **dadurch gekennzeichnet, dass** die Bilddaten und die Verwacklungsbewegungsdaten in einem geeigneten Datenformat in ener Dateneinheit abgelegt sind, sodass Bilddaten und zugehörige Verwacklungsbewegungsdaten synchron in einer Dateneinheit übertragbar sind.

12. Computerprogrammprodukt umfassend Programmcodemittel die auf einem computerlesbaren Medium gespeichert sind, um das Verfahren nach Anspruch 9 durchzuführen, wenn das Programmprodukt in einem Computer läuft.

## Claims

1. Data processing device (5) for an image stabilization system (1) for the purpose of generating digital images of objects with few vibration errors, and of transmitting image data of an image that are to be acquired by means of at least one optical system (2), and in addition of transmitting relative movement data of the optical system (2) in relation to the image, said data being acquired as vibration movement data of the image by means of at least one motion sensor (3), the data processing device (5) having a digital interface (5b) with which the image data of the optical system (2) are transmitted by row and/or by column and the vibration movement data of the motion sensor (3) are transmitted synchronously, and by which the data are transmitted to a microcontroller (4) in a focused and synchronized fashion via a common data line (5d), **characterized in that** the interface (5b) synchronously combines the image data and the vibration movement data for transmission to the microcontroller (4) with one another, the interface (5b) adding an additional row and/or column to the rows and columns of a format, designed in matrix notation, of the image data, which additional row and/or column include the vibration movement data, and which also transmit the vibration movement data as data packets with the corresponding rows/columns of the image data in rows and/or columns.

2. Data processing device (5) according to Claim 1, **characterized in that** the interface (5b) transmits the image data in groups in rows and/or columns, it being possible to transmit the groups sequentially.

3. Data processing device (5) according to Claim 1 or 2, **characterized in that** the interface (5b) transmits at least two relative movement data in different directions in a fashion synchronized with the image data.

4. Image stabilization system (1) for generating digital images of objects with few vibration errors, comprising at least one optical system (2) for optically acquiring and generating image data of the object, at least one motion sensor (3) for acquiring vibration movement data during the optical acquisition and generation, at least one microcontroller (4) for image-processing correction of the acquired and generated image data with the aid of the acquired vibration movement data, in order to generate digital images with no vibration errors, **characterized in that** the microcontroller (4) is connected via a data processing device (5) according to one of the preceding Claims 1 to 3 to the optical system (2) and the motion sensor (3) in order to transmit the acquired data in a synchronized fashion.

5. Image stabilization system (1) according to Claim 4, **characterized in that** the motion sensor (3) acquires vibration movement data selected from the group comprising relative movements between the optical system (2) and motion sensor (3), rotation rates of the optical system (2), acceleration rates of the optical system (2), magnetic rates of the optical system (2) and the like.

6. Image stabilization system (1) according to Claim 4 or 5, **characterized in that** the motion sensor (3) acquires a plurality of vibration movement data in different directions and/or about different axes.

7. Image stabilization system (1) according to one of the preceding Claims 4 to 6, **characterized in that** the optical system (2) and the motion sensor (3) are designed to be integrated in a unit.

8. Image acquisition unit, in particular a mobile phone, camera, photographic apparatus, video camera and the like, **characterized in that** the image acquisition unit is designed with an image stabilization system (1) according to one of the preceding Claims 4 to 7.

9. Method for generating digital images of objects with few vibrations, comprising the steps of:
optically acquiring and generating image data of the object by means of at least one optical system (2),
acquiring vibration movement data during the optical acquisition and generation by means of at least one motion sensor (3),
transmitting the acquired data to a microcontroller (4) by means of at least one data transmitting device (5), and
correcting by image processing the acquired and generated image data with the aid of the acquired vibration movement data by means of the microcontroller (4) in order to generate digital images with no vibration errors, in the transmitting step the acquired data of the optical system (2) being transmitted by row and/or by column and the acquired data of the motion sensor (3) being transmitted synchronously by a digital interface, and by which the data are transmitted to the microcontroller (4) by means of a data processing device (5) via a common data line (5d) in a bundled and synchronized fashion, **characterized in that**
the image data and the vibration movement data are synchronously combined with one another for transmission to the microcontroller (4) by the digital interface (5b) arranged between the optical system (2) and the motion sensor (3) and the microcontroller (4), the interface (5b) adding an additional row and/or column to the rows and columns of a format, designed in matrix notation, of the image data, and the vibration movement data also being transmitted with the corresponding rows/columns of the image data in rows and/or columns.

10. Computer program comprising program code means for carrying out all the steps in accordance with Claim 9 when the program is executed on a computer.

11. Computer program according to Claim 10, **characterized in that** the image data and the vibration movement data are stored in a suitable data format in a data unit such that image data and associated vibration movement data can be transmitted synchronously in a data unit.

12. Computer program product comprising program code means which are stored on a computer readable medium in order to carry out the method according to Claim 9 when the program product runs on a computer.

## Revendications

1. Dispositif de traitement de données (5) pour un système de stabilisation d'image (1) destiné à générer des images numériques d'objets présentant peu d'erreurs de bougé, pour transmettre des données d'image d'une image à collecter au moyen d'au moins un optique (2) et avec cela des données de mouvement relatif de l'optique (2) par rapport à l'image, collectées au moyen d'au moins un détecteur de mouvement (3) sous la forme de données de mouvement de bougé de l'image, le dispositif de traitement de données (5) présentant une interface numérique (5b) avec laquelle les données d'image de l'optique (2) sont transmises ligne par ligne et/ou colonne par- colonne et les données de mouvement de bougé du détecteur de mouvement (3) de manière synchrone et depuis laquelle les données sont transmises en paquets et synchronisées par le biais d'une ligne de données (5d) commune vers un microcontrôleur (4), **caractérisé en ce que** l'interface (5b) combine ensemble de manière synchrone les données d'image et les données de mouvement de bougé pour la transmission vers le microcontrôleur (4), l'interface (5b) ajoutant aux lignes et aux colonnes d'un format des données d'image configuré en écriture matricielle une ligne et/ou une colonne supplémentaire qui contient les données de mouvement de bougé et transmet les données de mouvement de bougé conjointement avec les lignes/colonnes correspondantes des données d'image ligne par ligne et/ou colonne par colonne sous la forme de paquets de données.

2. Dispositif de traitement de données (5) selon la revendication 1, **caractérisé en ce que** l'interface (5b) transmet les données d'image en groupages ligne par ligne et/ou colonne par colonne, les groupages pouvant être transmis séquentiellement.

3. Dispositif de traitement de données (5) selon la revendication 1 ou 2, **caractérisé en ce que** l'interface (5b) transmet de manière synchronisée avec les données d'image au moins deux données de mouvement relatif dans des directions différentes.

4. Système de stabilisation d'image (1) destiné à générer des images numériques d'objets présentant peu d'erreurs de bougé, comprenant au moins un optique (2) pour la collecte optique et la génération de données d'image de l'objet, au moins un détecteur de mouvement (3) pour collecter des données de mouvement de bougé lors de la collecte optique et de la génération, au moins un microcontrôleur (4) pour la correction par traitement d'image des données d'image collectées et générées à l'aide des données de mouvement de bougé collectées, afin de générer des images numériques présentant peu d'erreurs de bougé, **caractérisé en ce que** le microcontrôleur (4) est relié par le biais d'un dispositif de traitement de données (5) selon l'une des revendications précédentes 1 à 3 avec l'optique (2) et le détecteur de mouvement (3) afin de transmettre de manière synchrone les données collectées.

5. Système de stabilisation d'image (1) selon la revendication 4, **caractérisé en ce que** le détecteur de mouvement (3) collecte des données de mouvement de bougé, sélectionnées dans le groupe incluant les mouvements relatifs entre l'optique (2) et le détecteur de mouvement (3), les taux de rotation de l'optique (2), les taux d'accélération de l'optique (2), les taux magnétiques de l'optique (2) et similaires.

6. Système de stabilisation d'image (1) selon la revendication 4 ou 5, **caractérisé en ce que** le détecteur de mouvement (3) collecte plusieurs données de mouvement de bougé dans différentes directions et/ou autour de différents axes.

7. Système de stabilisation d'image (1) selon l'une des revendications précédentes 4 à 6, **caractérisé en ce que** l'optique (2) et le détecteur de mouvement (3) sont réalisés intégrés dans une unité.

8. Unité de collecte d'images, notamment téléphone portable (à fonction photo), caméra, appareil photo, caméra vidéo et similaire, **caractérisée en ce que** l'unité de collecte d'images est réalisée avec un système de stabilisation d'image (1) selon l'une des revendications précédentes 4 à 7.

9. Procédé pour générer des images numériques d'objets présentant peu d'erreurs de bougé, comprenant les étapes suivantes :
collecte optique et génération de données d'image de l'objet au moyen d'au moins un optique (2),
collecte de données de mouvement de bougé lors de la collecte optique et de la génération au moyen d'au moins un détecteur de mouvement (3),
transmission des données collectées à un microcontrôleur (4) au moyen d'au moins un dispositif de transmission de données (5) et correction par traitement d'image des données d'image collectées et générées à l'aide des données de mouvement de bougé collectées au moyen du microcontrôleur (4) afin de générer des images numériques sans erreurs de bougé, procédé selon lequel, dans l'étape de transmission, les données collectées de l'optique (2) sont transmises ligne par ligne et/ou colonne par colonne et celles du détecteur de mouvement (3) de manière synchrone par une interface numérique et depuis laquelle les données sont transmises en paquets et synchronisées par le biais d'une ligne de données (5d) commune vers le microcontrôleur (4) au moyen d'un dispositif de traitement de données (5), **caractérisé en ce que** les données d'image et les données de mouvement de bougé sont combinées ensemble de manière synchrone par l'interface numérique (5b) disposée entre l'optique (2) ainsi que le détecteur de mouvement (3) et le microcontrôleur (4) pour la transmission vers le microcontrôleur (4), une ligne et/ou une colonne supplémentaire étant ajoutée par l'interface (5b) aux lignes et aux colonnes d'un format des données d'image configuré en écriture matricielle et les données de mouvement de bougé étant transmises conjointement avec les lignes/colonnes correspondantes des données d'image ligne par ligne et/ou colonne par colonne.

10. Programme informatique comprenant des moyens de code de programme pour exécuter toutes les étapes selon la revendication 9 lorsque le programme est exécuté sur un ordinateur.

11. Programme informatique selon la revendication 10, **caractérisé en ce que** les données d'image et les données de mouvement de bougé sont stockées dans une unité de données dans un format de données approprié, de sorte que les données d'image et les données de mouvement de bougé associées peuvent être transmises de manière synchrone dans une unité de données.

12. Produit programme informatique comprenant des moyens de code de programme qui sont enregistrés sur un support lisible par ordinateur pour mettre en oeuvre le procédé selon la revendication 9 lorsque le produit programme est exécuté sur un ordinateur.
